# NEW EUROPEAN PATENT SPECIFICATION

(11) **EP 0 256 233 B2**
(45) Date of publication and mention of the opposition decision: **25.08.1993**
(45) Mention of the grant of the patent: 22.11.1990
(21) Application number: 87108137.8
(22) Date of filing: 04.06.1987
(51) Int. Cl.: B22F 1/00

(54) **Process for producing spherical powder particles**
Verfahren zur Herstellung von sphärischem Pulver
Procédé de préparation de particules sphériques

(30) Priority: 11.08.1986 US 895564
(43) Date of publication of application: 24.02.1988
(73) Proprietor: GTE Products Corporation, Wilmington, DE 19801 (US)
(72) Inventor: Kemp, Preston Butler, Jr., Athens, PA 18810 (US)
(74) Representative: Grünecker, Kinkeldey, Stockmair & Schwanhäusser Anwaltssozietät

(56) References cited:
- EP-A- 149 027
- EP-A- 0 079 796
- DE-A- 3 345 983
- Ullmanns Enzyklopädie der technischen Chemie, 1978, Band 15, Seite 682

## Description

This invention relates to a process for producing spherical particles from a metal or metal alloy scrap material which involves mechanically reducing the size of the starting material followed by high temperature processing to produce spherical particles. More particularly the high temperature process is a plasma process.

Spherical metal or metal alloy particles such as iron, iron-nickel alloys, stainless steels, copper, etc. are useful in applications such as filters, press and sinter parts, and injection molded parts.

A commercial process is already known for producing such metal powder particles by gas or water atomization.

Scrap materials produced as a result of machining or metal working processes have traditionally been reclaimed by melting in a furnace with other form of scrap. Because of their relatively fine size and low bulk density, machining chips, etc. are among the least suitable forms of scrap for remelting. They tend to float on top of the melt or be drawn up the exhaust stack of the furnace. This results in a loss of valuable metal content material. Also because of theirfine size and low bulk density, large volumes of chips must be stored up before they can be remelted. This results in valuable material being tied up and unavailable for use.

According to DE-A 3 345 983 spherical metallic particles are prepared from metal parts such as scrap material, preferably in the form of compressed tablets, by feeding the latterfrom above into an energetic stream of gas which is directed against the force of gravity and where the material is held suspendend in a melting zone to form droplets which are cooled in flight to solidify as particles.

### SUMMARY OF THE INVENTION

In accordance with this invention, there is provided a process for producing spherical powder particles from metal or metal alloy scrap material wherein the resultant powder particles have a particle size of less than about 50 micrometers. The process of the present invention is defined in claim 1. Preferred embodiments and further improvements are indicated in the subclaims.

### BRIEF DESCRIPTION OF THE FIGURES

Figure 1 is a photograph of a typical starting machining scrap material of this invention.
Figure 2 is a photograph of the material of Figure 1 after pre-crushing.
Figure 3a is a photograph of the material of Figures 1 and 2 which has been vibratory ball milled after pre-crushing.
Figure 3b is a SEM photomicrograph at about 40x magnification of the material of Figure 3a.
Figure 3c is an SEM photomicrograph at a magnification of about 100x of the material of Figure 3a.
Figure 4 is an SEM photomicrograph at a magnification of about 60x of the material of Figure 3 after plasma processing, screened to a particle size range of from about 44 to about 150 micrometers in diameter.
Figure 5 is an SEM photomicrograph at a magnification of about 120x of the material of Figure 3 after plasma processing and classifying to a particle size of from about 37 to about 44 micrometers in diameter.

### DETAILED DESCRIPTION OF THE INVENTION

For a better understanding of the present invention, together with other and further objects, advantages and capabilities thereof, reference is made to the following disclosure and appended claims in connection with the above described figures and description of some of the aspects of the invention.

The starting material of this invention is preferably metals and metal alloys. Especially preferred of these are iron and nickel based alloys, tool steels, refractory metals and their alloys, copper, and copper based alloys.

The starting material is in the form of scrap material from machining and metalworking operations. The term scrap material as used in this invention refers to scrap resulting from (a) chip forming processes including but not limited to: drilling, boring, reaming, tapping, turning, facing, broaching, planing, shaving, lapping, grinding, honing, trepanning, sawing, and filing; (b) other metalworking processes such as stamping, shearing, blanking, punching, nibbling, slitting, electrodischarge machining(EDM); and (c) cutting and welding processes such as plasma gas, laser, arc, or electron beam cutting and welding. The machining scraps can vary in geometry, for example, they can have shapes varying from fiber-like chips to spring-like lathe and drilling chips.

The preferred starting material is metal chips which are less than about 5 millimeters thickwhich result from turning, drilling, and other traditional chip forming machining.

The scrap meterial can be pre-treated if necessary to put it in condition for further processing. For example, scrap material having oil on it can be heated to burn off the oil. The carbonaceous residue which results from this treatment can be removed by washing the scrap. The residue can be left on the scrap to be incorporated into the scrap during the subsequent size reduction step. This eliminates the need to add carbon, for example, graphite in materials which require additional carbon. Alternately, the scrap material can be vapor degreased to remove cutting fluids. If the scrap material is not brittle initially, it may be possible to embrittle it, for example by thermal treatment before size reduction.

At this point the scrap material can be pre-crushed if the material is unusually coarse or large in size. This allows the material to be rendered of a suitable size for the subsequent milling operation.

The size of the starting material is mechanically reduced to less than about 250 micrometers in diameter or across the widest part of the particle. It is important that the material be of a suitable size prior to the high temperature processing step. That is, the material should be of size ranges so that there is essentially no grossly out of size material. Any material which is significantly larger than the bulk of the material will possibly not completely melt under the specific conditions in the high temperature treatment step. This can cause problems such as blocking feed lines to the plasma gun, or, if the material does melt it may not solidify in flight with the bulk of the material and it can build up as a deposit in the collection chamber. The methods of mechanically reducing the size of the starting material are by (1) high energy vibratory milling in which the milling media can be either balls or rods, and (2) attritor milling, with high energy vibratory ball or rod milling being especially preferred. High energy vibratory milling is a commercial process and is capable of breaking down material very rapidly to the desired size. The high energy milling operation can be carried out by standard methods on a large scale and in a continuous operation such as by feeding the scraps in one end of the mill, classifying, and returning the coarse material to the entering stream for additional milling.

The resulting reduced size material is then dried if it has been wet such as by a wet milling technique.

If necessary, the reduced size material is fired at a temperature of greater than about 200°C to remove carbon and oxygen, etc.

The reduced size material is then entrained in a carrier gas such as argon and passed through a high temperature zone at a temperature above the melting point of the reduced size material for a sufficient time to melt the major portion of the material and form essentially spherical particles of the major portion. The preferred high temperature zone is a plasma.

Details of the principles and operation of plasma reactors are well known. The plasma has a high temperature zone but in cross section, the temperature can vary from about 5500°C to about 17,000°C. The outer edges are at low temperatures and the inner part is at a higher temperature. The retention time depends upon where the particles entrained in the carrier gas are injected into the nozzle of the plasma gun. Thus, if the particles are injected into the outer edge, the retention time must be longer, and if they are injected into the inner portion, the retention time is shorter. The residence time in the plasma flame can be controlled by choosing the point at which the par- tides are injected into the plasma. Residence time in the plasma is a function of the thermo-physical properties of the plasma gas and the powder material itself for a given set of plasma operating conditions and powder particles.

As the material passes through the plasma and cools, it is rapidly solidified. Generally the major portion of the material is converted to spherical particles by the high temperature treatment. Typically greater than about 75% by weight of the material is converted to the spherical particles. The size of the spherical particles are typically less than about 250 micrometers in diameter.

After cooling an resolidification, the resulting high temperature treated material can be classified to remove the major spheroidized particle portion from the essentially non-spheriodized minor portion of particles. The classification can be done by standard techniques such as screening or air classification.

The unmelted minor portion can then be reprocessed according to the invention to convert it to spherical particles.

The resulting resolidified material is be further mechanically reduced, to a particle size of less than about 50 micrometers in diameter and high temperature treated according to the process described previously.

The above described process allows processing of scrap material directly to spherical powder without the need for costly arc remelting furnaces and with lower processing costs than conventional melt- atomize processing.

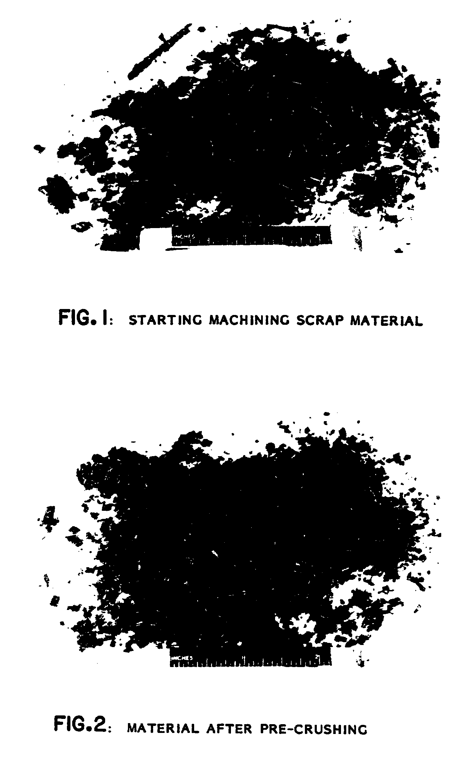

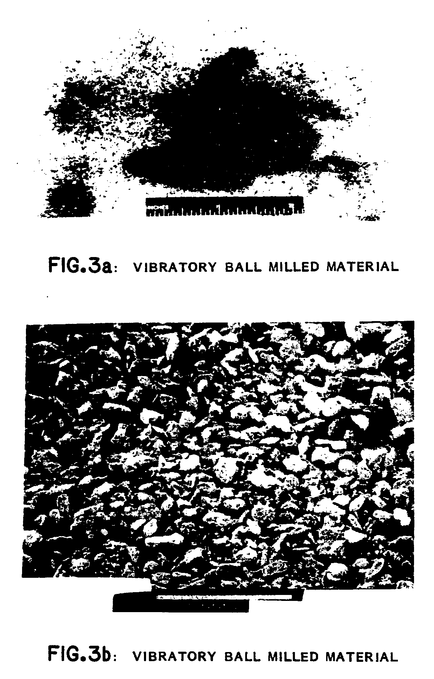

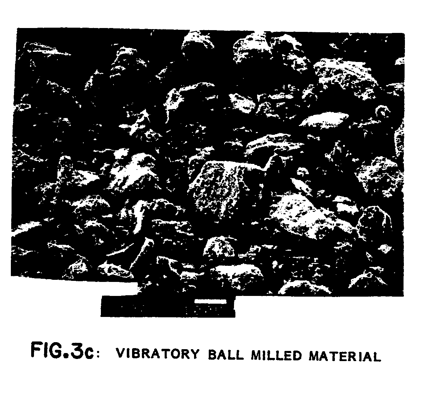

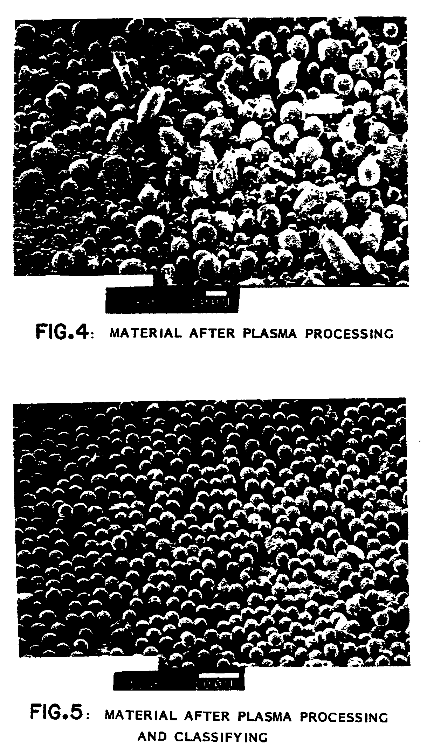

Figures 1 through 5 are photographs and SEM photomicrographs showing the condition of a typical material of this invention at each critical step of the process. Figure 2 is a photograph of machining scraps as starting material. Figure 2 is a photograph of the material of Figure 1 after pre-crushing. Figures 3a, 3b, and 3c are photographs and SEM photomicrographs of the material of Figures 1 and 2 which has been vibratory ball milled after pre-crushing. Figure 4 is an SEM photomicrograph of the material of Figure 3 after plasma processing at a magnification of about 60x, screened to a particle size of from about 44 micrometers to about 150 micrometers in diameter. Figure 5 is an SEM photomicrograph of the material of Figure 3 after plasma processing and classifying to a particle size of from about 37 to about 44 micrometers in diameter at a magnification of 120x. It can be seen that the material undergoes significant changes at each step with the result being production of spherical particles.

To more fully illustrate this invention, the following non-limiting example is presented (first stage only).

### Example

Iron alloy machining chips are first roll crushed to break up the long spring-like chips. The crushed chips are then furnace fired at about 600°C to remove cutting oils and to reduce the iron oxide on their surfaces. The chips are next vibratory milled in a Hum- boldt-Wedag Palla mill, model 20U. The resulting size reduced chips are classified to less than about 150 micrometers and the oversized chips are returned to the mill for further grinding. The fraction of the material which is less than about 150 micrometers in diameter is fed to a plasma gun and melted to produce spherical particles having a particle size of less than about 150 micrometerrs in diameter.

The plasma conditions are:
Plasma Gas Flow: Argon - about 32 liters/min. Hydrogen - about 5 liters/min.
Carrier Gas FLow: Argon about 3 liters/min.

While there has been shown and described what are at present considered the preferred embodiments of the invention, it will be obvious to those skilled in the art that various changes and modifications may be made therein without departing from the scope of the invention as defined by the appended claims.

## Claims

1. A process for producing spherical powder particles, from metal or metal alloy scrap material, said process comprising:
a) reducing the size of said scrap material to less than about 250 micrometers in diameter by methods selected from the group consisting of high energy vibratory milling and attritor milling;
b) entraining the resultant reduced size material in a carrier gas and passing said reduced size material through a high temperature zone at a temperature above the melting point of said reduced size material to melt the major portion of said reduced size material and form essentially spherical particles of said major portion;
c) resolidifying the resultant high temperature treated material; and
d) reducing the resultant high temperature treated material after said resolidification to a particle size of less than about 50 micrometers in diameter,
wherein
e) after said last mentioned mechanically reducing step, the resultant reduced size material is entrained in a carrier gas and passed through a high temperature zone of a temperature above the melting point of said reduced size material to melt the major portion of said reduced size material and form essentially spherical particles of said major portion of said spherical particles having a particle size of less than about 50 micrometers, followed by resolidifying the resultant high temperature treated material.

2. A process as set forth in claim 1, wherein said first mentioned high temperature zone is a plasma.

3. A process as set forth in claim 1, wherein after said first resolidification, said high temperature treated material is classified to remove said major portion from the minor portion of essentially non- spherical particles.

4. A process as set forth in claim 1, wherein said starting material is selected from the group consisting of iron- and nickle-based alloys, tool steels, refractory metals, alloys of refractory metals, copper and copper-based alloys.

5. A process as set forth in claim 1, wherein said second mentioned high temperature zone is a plasma.

## Patentansprüche

1. Verfahren zur Herstellung sphärischer Pulverteilchen aus Metall- oder Metall-Legierungsschrott, umfassen:
(a) mechanisches Verringern der Größe des Schrotts auf weniger als ungefähr 250 Mikrometer im Durchmesser mittels Verfahren ausgewählt aus der Gruppe bestehend aus Hochengergie-Vibratormahlen und Attritormahlen;
(b) Einbringen des resultierenden größenverringerten Materials in ein Trägergas und Durchführen des größenreduzierten Materials durch eine Hochtemperaturzone bei einer Temperatur oberhalb des Schmelzpunktes dieses größenreduzierten Materials um einen Großteil des größenreduzierten Materials zu schmelzen und im wesentlichen sphärische Teilchen dieses Großteils zu bilden;
(c) Wiederverfestigen des resultierenden hochtemperaturbehandelten Materials; und
(d) Reduzieren des resultierenden hochtemperaturbehandelten Materials nach der Wiederverfestigung auf eine Teilchengröße von weniger als u ngefähr 50 Mikrometer im Durchmesser, wobei
(e) nach diesem zuletzt genanntem mechanischem Reduktionsschritt das resultierende größenreduzierte Material in ein Trägergas eingeführt wird und durch eine Hochtemperaturzone mit einer Temperatur oberhalb des Schmelzpunktes dieses größenreduzierten Materials durchgeführt wird, um den Großteil dieses größenreduzierten Materials zu schmelzen und im wesentlichen sphärische Teilchen aus dem Großteil dieser sphärischen Teilchen zu bilden, welche eine Teilchengröße von weniger als 50 Mikrometer aufweisen, gefolgt von einem Wiederverfestigen des resultierenden hochtemperaturbehandelten Materials.

2. Verfahren nach Anspruch 1, wobei diese zuerst genannte Hochtemperaturzone ein Plasma ist.

3. Verfahren nach Anspruch 1, wobei nach dem ersten Wiederverfestigen, dieses hochtemperaturbehandelte Material klassifiziert wird, um diesen Großteil von dem kleineren Teil im wesentlichen nichtsphärischen Teilchen zu trennen.

4. Verfahren nach Anspruch 1, wobei das Ausgangsmaterial ausgewählt ist aus einer Gruppe bestehend aus Legierungen auf Eisen- und Nickelbasis, Werkzeugstählen, hochschmelzenden Metallen, Legierungen hochschmelzender Metalle, Kupfer und Legierungen auf Kupferbasis.

5. Verfahren nach Anspruch 1, wobei diese zweite genannte Hochtemperaturzone ein Plasma ist.

## Revendications

1. Procédé d'obtention de particules sphériques en poudre à partir d'un matériau en fragments d'un métal ou d'un alliage métallique, le dit procédé comprenant les étapes suivantes:
a) réduire la taille du dit matériau en fragments à un diamètre inférieur à 250 f..lm environ par des procédés choisis dans le groupe comprenant le broyage vibratoire à haute énergie et la broyage à usure;
b) entraîner le matériau résultant de taille réduite dans un gaz porteur et faire traverser le dit matériau de taille réduite une zone à température élevée supérieure à la température de fusion du dit matériau de taille réduite pour faire fondre la majeure partie du dit matériau de taille réduite et former des particules essentiellement sphériques de la dite majeure partie; et
c) re-solidifier le matériau résultant traité à température élevée; et
d) réduire le matériau traité à température élevée après re-solidification à une taille des particules inférieure à 50 µm en diamètre environ.
dans lequel
e) après la dite dernière étape citée de réduction mécanique, le matériau résultant de taille réduite est entraîné par un gaz porteur à travers une zone à température élevée d'une température supérieure à celle de fusion du dit matériau de taille réduite pour faire fondre la majeure partie du dit matériau de taille réduite et former des particules essentiellement sphériques de la dite majeure partie des dites particules sphériques présentant une taille des particules inférieure à 50 µm environ, puis le matériau résultant traité à température élevée est re-solidifié.

2. Procédé selon la revendication 1 dans lequel la dite première zone citée à température élevée est un plasma.

3. Procédé selon la revendication 1 dans lequel après la dite première re-solidification, le dit matériau traité à température élevée est divisé pour ôter la dite majeure partie de la partie mineure des particules essentiellement non-sphériques.

4. Procédé selon la revendication 1 dans lequel le dit matériau initial est choisi dans le groupe comprenant les alliages à base de fer et de nickel, les aciers pour outils, les métaux réfractaires, les alliages de métaux réfractaires, le cuivre et les alliages à base de cuivre.

5. Procédé selon la revendication 1 dans lequel la dite deuxième zone citée à température élevée est un plasma.
